# EUROPÄISCHE PATENTSCHRIFT

(11) **EP 1 024 978 B1**
(45) Veröffentlichungstag und Bekanntmachung des Hinweises auf die Patenterteilung: **11.05.2005**
(21) Anmeldenummer: 98950021.0
(22) Anmeldetag: 10.09.1998
(51) Int. Cl.: B60R 21/20

(54) **FAHRZEUGSITZ**
VEHICLE SEAT
SIEGE AUTOMOBILE

(30) Priorität: 20.10.1997 DE 19746234
(43) Veröffentlichungstag der Anmeldung: 09.08.2000
(73) Patentinhaber: Volkswagen Aktiengesellschaft, 38436 Wolfsburg (DE)
(72) Erfinder: BREYVOGEL, Jörg, D-38165 Lehre (DE); SINNHUBER, Ruprecht, D-38518 Gifhorn (DE)
(86) Internationale Anmeldenummer: PCT/EP1998/005776
(87) Internationale Veröffentlichungsnummer: WO 1999/020493

(56) Entgegenhaltungen:
- EP-A- 0 733 518
- EP-A- 0 788 940
- DE-A- 19 505 216
- DE-A- 19 603 946
- DE-A- 19 704 290
- DE-C- 19 622 662
- GB-A- 2 296 476

## Beschreibung

Die Erfindung betrifft einen Fahrzeugsitz mit wenigstens einem seitlich wirkenden Airbagmodul, wobei das Airbagmodul aus einem Gasgenerator, einer Airbagbox und einer den Gasgenerator und die Airbagbox verbindenden Gaszuführeinrichtung besteht, umfassend ferner eine Rückenlehne und ein mit dieser beispielsweise über Sitzbeschläge verbundenes Sitzteil, wobei die Rückenlehne und/oder das Sitzteil einen aus Profilen bestehenden Rahmen aufweist.

Aus der DE 196 22 662 C1 ist beispielsweise ein Fahrzeugsitz mit einer Kopfstütze bekannt, wobei ein seitlich wirkendes Airbagmodul im Kopfbereich dargestellt ist. Die Airbagbox und der Gasgenerator sind hierbei über eine Gaszuführeinrichtung verbunden, die durch eine hohle Kopfstützstange erfolgt. Es wird aber auch vorgeschlagen, die hohle Kopfstützstange selbst als Gaszuführeinrichtung zu verwenden. Der Gasgenerator ist dabei in der Rückenlehne angeordnet. Es wird jedoch keine nähere Anregung dazu gegeben, welche Mittel zur Unterbringung des Gasgenerators heranzuziehen sind.

Auch in der DE 195 05 216 wird aus Platzgründen vorgeschlagen, den Gasgenerator vom Airbag getrennt im Sitz oder in einer Fahrzeugseite verdeckt anzuordnen und das benötigte Gas über Verbindungsschläuche zum Airbag zu leiten. Eine nähere Anregung zur Unterbringung des Gasgenerators fehlt auch hier.

Ausgehend von diesem Stand der Technik ist es die Aufgabe der vorliegenden Erfindung, einen Fahrzeugsitz der oben genannten Art bereitzustellen, der eine platzsparende und funktionssichere Unterbringung eines Airbagmoduls ermöglicht.

Diese Aufgabe wird durch die Merkmale des Hauptanspruch gelöst. Erfindungsgemäß ist vorgesehen, daß wenigstens ein Profil des Rahmens derart ausgebildet ist, daß es zur Aufnahme des Gasgenerators und/oder der Airbagbox dienen kann. Auf diese Weise können der Gasgenerator und/oder die Airbagbox sehr platzsparend im Fahrzeugsitz untergebracht werden, wobei gleichzeitig durch die Profile ein sicherer Halt und auch erhöhter Schutz der empfindlichen Bauteile erzielt wird.

Eine zweckmäßige Weiterbildung der Erfindung kann vorsehen, daß wenigstens ein Profil derart ausgebildet ist, daß es direkt als Gaszuführeinrichtung dient. Dies führt zur Bauteilreduzierung und verbessert gleichzeitig die Stabilität der Gaszuführeinrichtung, die normalerweise aus einem Schlauch oder einer dünnen Lanze besteht.

Wenn zweckmäßigerweise vorgesehen ist, daß das wenigstens eine Rahmenprofil ein Hohlprofil ist, welches eine mittels Innenhochdruckumformung erzeugte Profilgestalt aufweist, können die Rahmenprofile sehr kostengünstig und genau hergestellt werden und beispielsweise mit notwendigen Aufnahmeflächen versehen werden ohne daß eine Nachbearbeitung notwendig ist.

In höchst vorteilhafter Weise kann vorgesehen sein, daß der Rahmen der Rückenlehne wenigstens aus zwei äußeren Vertikalprofilen und zwei äußeren Horizontalprofilen besteht, wobei die Airbagbox in einem bestimmten äußeren Vertikalprofil und der Gasgenerator in einem anderen Profil untergebracht ist. Dabei kann z. B. der Gasgenerator in einem Horizontalprofil der Rückenlehne oder in dem anderen äußeren Vertikalprofil der Rückenlehne untergebracht sein. Somit wird der Gasgenerator im ausreichenden Abstand von der Airbagbox, also der unmittelbaren Gefahrenzone gehalten, was im Ernstfall die Funktionssicherheit des Airbagmoduls erheblich erhöht. Wenn der Gasgenerator im untersten Horizontalprofil der Rückenlehne untergebracht ist, werden die auf die Sitzbeschläge wirkenden Drehmomente minimiert.

Nach einer weiteren sinnvollen Ausgestaltung der Airbagbox ist diese in eine taschenartige Vertiefung des äußeren Vertikalprofils eingepaßt. Die Airbagbox weist dabei vorteilhafterweise Mittel zur Abstützung auf, die zweckmäßigerweise als im wesentlichen umlaufender Flansch ausgebildet sein können. Die Airbagbox kann somit höchst platzsparend im seitlichen Bereich der Rückenlehne untergebracht werden, wobei eine sichere Abstützung und ein höchstmöglicher Schutz der Airbagbox durch das Profil gewährleistet ist.

Die Erfindung kann mit relativ geringem Aufwand in eine bereits laufende Sitzfertigung eingebunden werden. Bis auf eine gezielte Änderung einzelner Teile bleibt die ursprüngliche Sitzkonstruktion weitestgehend erhalten. Außerdem erhält man durch die getrennte Anordnung von Gasgenerator und Airbagbox an der jeweiligen Sitzseite einen sehr flachen Aufbau, sodaß für den Einbau des erfindungsgemäß ausgeführten Sitzes in laufende Fahrzeugserien bzw. für die Um- oder Nachrüstung keine Kollisionsprobleme mit benachbarten Einbau- oder Wandteilen zu erwarten sind.

Hervorzuheben ist auch, daß mit der Erfindung unterschiedliche Sicherheitskonzepte verwirklicht werden können. So zielt eine Applikation am Rückenlehnenrahmen in erster Linie auf einen Thorax- und/oder Kopfschutz ab. Ergänzend kann ein wirksamer Beckenschutz erhalten werden, wenn die Airbagbox dem Sitzrahmen des Sitzteils zugewiesen wird.

Bevorzugte Ausführungsbeispiele der Erfindung werden nun anhand der beiliegenden Figuren näher erläutert. Dabei zeigen:
- Fig. 1: eine perspektivische Ansicht des erfindungsgemäßen Fahrzeugsitzes, teilweise in Explosionsdarstellung, wobei das Sitzteil nicht dargestellt ist;
- Fig. 2: einen teilweisen Vertikalschnitt durch ein äußeres Vertikalprofil der Rückenlehne im Bereich der montierten Airbagbox;
- Fig. 3: eine Prinzipdarstellung des Rückenlehnenrahmens mit montiertem Airbagmodul;
- Fig. 4: eine prinziphafte Darstellung des Rückenlehnenrahmens mit weiteren Anordnungsmöglichkeiten für das Airbagmodul.

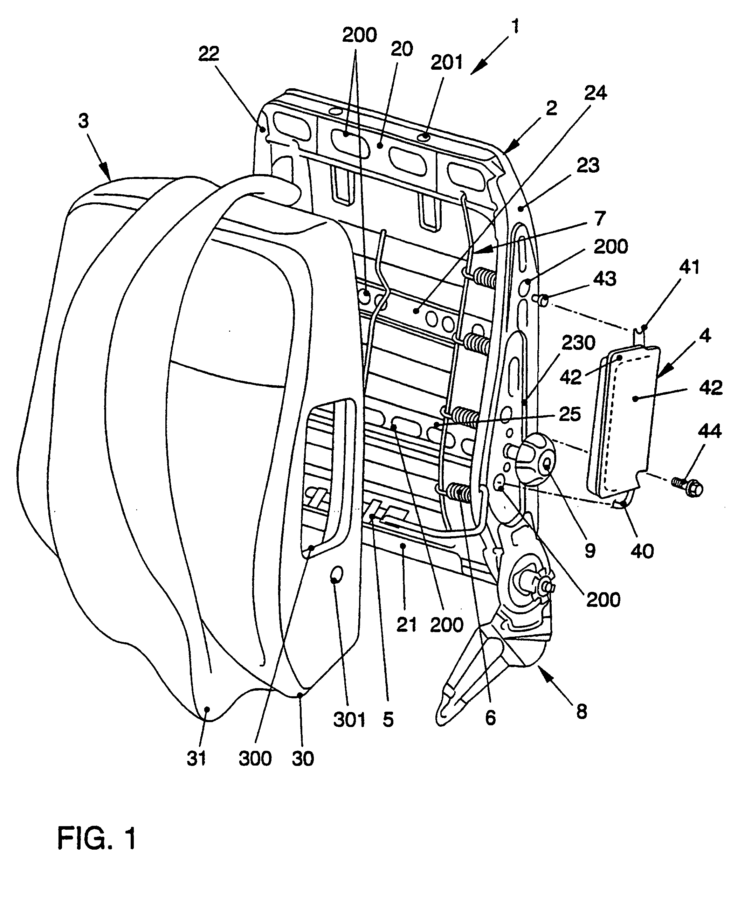

Zunächst wird auf Fig. 1 Bezug genommen. Dort erkennt man in perspektivischer Darstellung den erfindungsgemäßen Fahrzeugsitz 1, der einen Rückenlehnenrahmen 2 und eine auf diesem gestützte Polsterung 3 umfaßt.

Der Rückenlehnenrahmen 2 besteht aus einer oberen Horizontalstrebe 20 und einer unteren Horizontalstrebe 21. Die Horizontalstreben 20, 21 sind über zwei äußere Vertikalstreben 22, 23 miteinander verbunden. Zwischen den Horizontalstreben 20, 21 sind in etwa horizontal ausgerichtete Querstreben 24, 25 zur Stabilisierung des Rückenlehnenrahmens 2 vorgesehen. Der Rückenlehnenrahmen 2 ist bevorzugt durch Innenhochdruckumformung hergestellt, wobei seine Streben beispielsweise im Querschnitt in etwa U- oder C-förmig ausgebildet sind und deren offene Seiten teilweise aufeinander zuzeigen. Ferner sind die Streben 20, 21, 22, 23, 24, 25 mit Ausnehmungen 200 versehen, die zur Material- und Gewichtsreduzierung des Rückenlehnenrahmens 2 beitragen. Die Ausnehmungen 200 können beispielsweise kreisförmig oder langlochförmig ausgebildet sein.

An der oberen Horizontalstrebe 20 sind Löcher 201 zur Aufnahme von Haltebügeln einer nicht näher dargestellten Kopfstütze vorgesehen. Desweiteren dient der Rückenlehnenrahmen 2 zur Halterung einer federgelagerten Rückenabstützung 7, welche der auf dem Rückenlehnenrahmen 2 montierten Polsterung 3 die nötige Spannkraft verleiht.

In Fig. 1 ist ferner an der äußeren Vertikalstrebe 23 eine Vertiefung 230 zur zumindest teilweisen Aufnahme einer Airbagbox 4 mit nicht näher dargestelltem - vorzugsweise kissenartig ausgeführtem - Airbag vorgesehen. Die Airbagbox 4 weist im Grundriß in etwa rechteckige Form auf und ist als länglicher, schachtelartiger Körper ausgebildet. Ferner ist die Airbagbox 4 mit einem umlaufenden Flansch 42 versehen, der als Montagehilfe bzw. Abstützung der Airbagbox 4 an der Vertikalstrebe 23 dient. An der oberen Querseite der Airbagbox 4 ist eine ösenartige Anformung 41 vorgesehen, die zur Justierung an einem vertikalstrebenseitig vorgesehenen stiftartigen Montageelements 43 dient. Zur Befestigung der Airbagbox 4 an der Vertikalstrebe 23 ist eine Schraube 44 vorgesehen. Natürlich ist die Montage der Airbagbox 4 auch auf andere Art und Weise, beispielsweise durch Rastverbindungen oder nachgiebige Federelemente denkbar. Außerdem umfaßt der Begriff Airbagbox auch gehäuselos zusammengelegte Gaskissen.

An der unteren Querseite der Airbagbox 4 ist ein rohrartiger Anschlußstutzen 40 ersichtlich, der zum Anschluß einer Verbindungsleitung 6 dient, welche die Airbagbox 4 mit einem skizzierten Gasgenerator 5 verbindet. Der Gasgenerator 5 ist dabei in der unteren Horizontalstrebe 21 des Rückenlehnenrahmens 2 untergebracht.

Durch die örtliche Trennung von Gasgenerator 5 und dem in der Airbagbox 4 befindlichen Airbag, nimmt die Airbagbox 4 nur noch wenig Platz ein. Denn in der Vertikalstrebe 23 muß nicht zusätzlich noch der Gasgenerator 5 untergebracht werden. Somit kann selbst bei sehr beengten Platzverhältnisses, wie z. B. geringem Abstand von B-Säule bzw. Fahrertür zum Fahrzeugsitz 1 ein seitlicher Airbagschutz mühelos vorgesehen sein bzw. nachgerüstet werden.

Desweiteren ist zu berücksichtigen, daß durch die getrennte Unterbringung des Gasgenerators 5 beispielsweise in der unteren Horizontalstrebe 21 eine sehr zuverlässige Befestigung des Gasgenerators 5, sicher vom möglichen Gefahrenbereich entfernt, erfolgen kann und somit eine hohe Funktionssicherheit und Zuverlässigkeit der Intialzündung für den Airbag erreicht wird.

Nach Montage der Airbagbox 4 an der äußeren Vertikalstrebe 23 ragt der Anschlußstutzen 40 durch eine der Ausnehmungen 200. Die aus einem flexiblen Stützkörper 30 und einem Überzug 31 bestehende Polsterung 3 wird an den Rückenlehnenarmen 2 angebracht, wobei der Stützkörper 30 eine im Grundriß in etwa dem Grundriß der Airbagbox 4 angepaßte Öffnung 300 aufweist. Bei einem Unfall ermöglicht die Öffnung 300 die Expansion des in der Airbagbox 4 befindlichen Airbags nach außen. Unterhalb der Öffnung 300 ist ein Loch 301 vorgesehen, welches zum teilweisen Hindurchstecken eines Betätigungsrades 9 zur Neigungsverstellung des Rückenlehnenrahmens 2 dient. Der Rückenlehnenrahmen 2 ist dabei über Sitzbeschläge 8 mit einem nicht näher dargestellten Sitzteilrahmen beweglich verbunden.

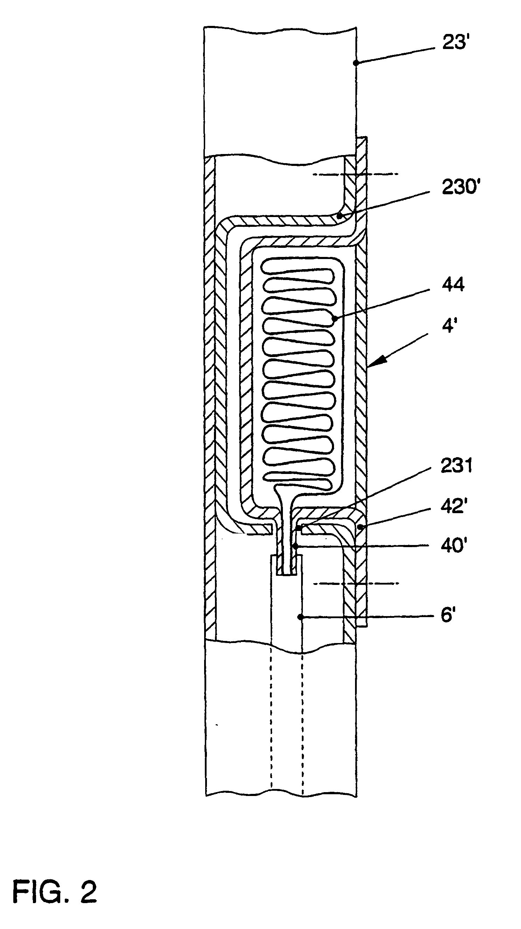

Fig. 2 zeigt einen Ausschnitt einer äußeren Vertikalstrebe 23' eines Rückenlehnenrahmens, wobei die Vertikalstrebe 23' mit einer taschenartigen Vertiefung 230' versehen ist. Die Vertiefung 230' ist beispielsweise mittels des Innenhochdruckumformverfahrens in die Vertikalstrebe 23' eingeformt und nimmt eine Airbagbox 4' nahezu vollständig auf. Lediglich die Abstützung bzw. Befestigung an der Vertikalstrebe 23' erfolgt über einen umlaufenden Flansch 42', ähnlich dem umlaufenden Flansch 42 der Airbagbox 4 in Fig. 1. innerhalb der Airbagbox 4' befindet sich ein noch zusammengefalteter Airbag 44, der über eine Verbindungsleitung 6' mit einem nicht näher gezeigten Gasgenerator in Verbindung steht. Die Verbindungsleitung 6' ist über einen rohrartigen Anschlußstutzen 40' mit der Airbagbox 4' verbunden. Der Anschlußstutzen 40' ragt dabei durch ein in der unteren horizontalen Wandung der Vertiefung 230' eingebrachtes Loch 231.

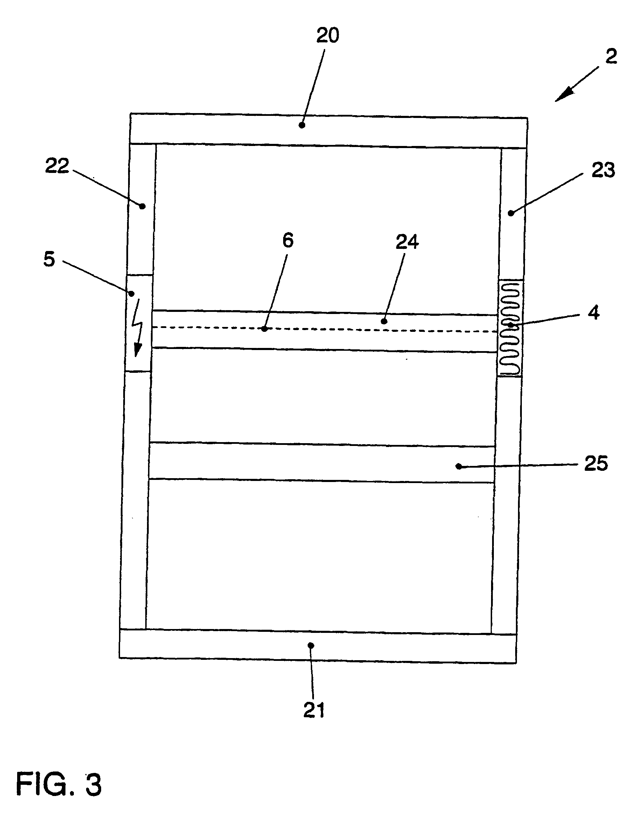

Ausgehend von Fig. 1 wird nun in Fig. 3 prinziphaft eine weitere Anordnungsmöglichkeit für ein aus dem Gasgenerator 5, der Verbindungsleitung 6 und der Airbagbox 4 bestehendes Airbagmodul dargestellt. Dabei sei noch erwähnt, daß zur Herstellung des Rückenlehnenrahmens 2 wie auch des nicht dargestellten Sitzrahmens auch ein kreisrundes, ovales oder viereckiges Rohrprofil als Ausgangsmaterial oder Halbzeug Verwendung finden kann, das zunächst mittels Biegewerkzeugen roh vorgeformt wird und anschließend per Innenhochdruckumformung seine endgültige Rahmengestalt erhält. Während der Innenhochdruckumformung selbst und/oder beispielsweise durch gezielte Werkzeugstempelbewegungen im Innenhochdruckumformwerkzeug können Funktionsprofile, wie z. B. Vertiefungen, Flansche oder Profilecken direkt aus dem Wandmaterial des Hohlprofils erzeugt werden.

In Fig. 3 ist nun ersichtlich, daß die Airbagbox 4 in der äußeren Vertikalstrebe 23 angeordnet ist, welche einer nicht dargestellten Fahrertür bzw. B-Säule gegenüberliegenden sollte. Der Gasgenerator 5 ist auf der gegenüberliegenden Seite des Rückenlehnenrahmens 2, und zwar in der anderen äußeren Vertikalstrebe 22 untergebracht. Wiederum sind der Gasgenerator 5 und die Airbagbox 4 über eine Verbindungsleitung 6 miteinander verbunden, welche in diesem Falle durch die obere Querstrebe 24 geführt ist.

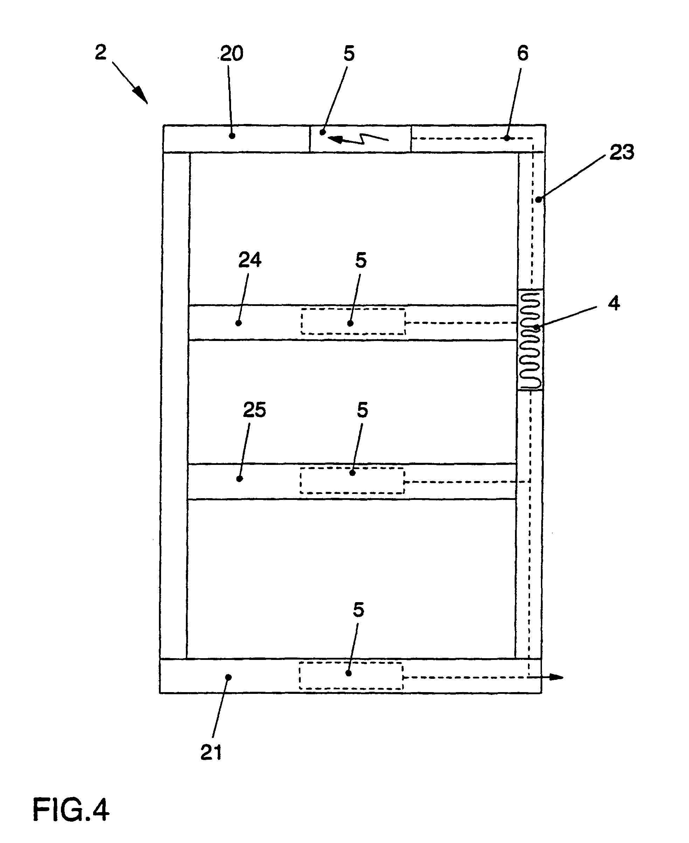

Fig. 4 zeigt weitere alternative Anordnungsmöglichkeiten für das aus Gasgenerator 5, Airbagbox 4 und Verbindungsleitung 6 bestehende Airbagmodul im Rückenlehnenrahmen 2. Hierbei ist der Gasgenerator 5 in der oberen Horizontalstrebe 20 vorgesehen und über die Verbindungsleitung 6 mit der in der Vertikalstrebe 23 untergebrachten Airbagbox 4 verbunden. Gestrichelt sind dabei weitere bevorzugte Positionen für die Unterbringung des Gasgenerators 5 direkt in den Streben (Profilen) des Rückenlehnenrahmens 2 angedeutet. So kann der Gasgenerator 5 ebenso in der oberen Querstrebe 24, der unteren Querstrebe 25 oder auch der unteren Horizontalstrebe 21 (vgl. auch Fig. 1) untergebracht sein. Dabei ist zu berücksichtigen, daß die Unterbringung des Gasgenerators 5 in der unteren Horizontalstrebe 21 zu einer minimalen Drehmomentbelastung der im Bereich der Horizontalstrebe 21 vorgesehenen Sitzbeschläge 8 führt.

Auf die in Fig. 3 und 4 dargestellten bevorzugten Anordnungen von dem Gasgenerator 5 und der Airbagbox 4 ermöglichen eine platzsparende und funktionssichere Unterbringung des Airbagmoduls, wobei die vorhandenen Profile des Rückenlehnenrahmens 2 ausgenutzt werden und der Gasgenerator vom möglichen Aufprallzentrum weiter entfernt sicher und funktionsgerecht untergebracht werden kann. Dabei kann die Unterbringung von Gasgenerator 5 und Airbagbox 4 beispielsweise in mit Fig. 2 vergleichbarer Weise erfolgen.

Es ist denkbar, daß zumindest die zwischen dem Gasgenerator 5 und der Airbagbox 4 befindlichen Profilteile derart ausgebildet sind, daß eine Art Verbindungskanal gebildet wird und so bereits ein Rahmenelement, beispielsweise wie die Querstrebe 24 gemäß Fig. 3 oder Fig. 4 gleichzeitig die Funktion der dort noch dargestellten Verbindungsleitung 6 übernimmt. Dies würde zu einer weiteren Reduzierung von Bauteilen führen. Statt der Verbindungsleitung 6 sind selbstverständlich auch ein lanzenartiges Verbindungsrohr oder vergleichbare Mittel denkbar.

Möglich ist allerdings auch, Bauteile des Airbagmoduls, beispielsweise den Gasgenerator 5 in vergleichbarer Weise in Rahmenprofilen eines nicht dargestellten Sitzrahmens unterzubringen.

### Bezugzeichenliste

- 1: Fahrzeugsitz
- 2: Rückenlehnenrahmen
- 3: Polsterung
- 4: Airbagbox
- 5: Gasgenerator
- 6: Verbindungsleitung
- 7: Rückenabstützung
- 8: Sitzbeschläge
- 9: Betätigungsrad
- 20: obere Horizontalstrebe
- 21: untere Horizontalstrebe
- 22: Vertikalstrebe
- 23: Vertikalstrebe
- 24: Querstrebe
- 25: Querstrebe
- 30: flexibler Stützkörper
- 31: Überzug
- 40: rohrartiger Anschlußstutzen
- 41: ösenartige Anformung
- 42: umlaufender Flansch
- 43: stiftartiges Montageelement
- 44: Airbag
- 200: Ausnehmungen
- 230': taschenartige Vertiefung
- 230: Vertiefung
- 231: Loch in der Wandung der Vertikalstrebe
- 300: Öffnung des Stützkörpers
- 301: Loch

## Patentansprüche

1. Fahrzeugsitz mit wenigstens einem seitlich wirkenden Airbagmodul, wobei das Airbagmodul aus einem Gasgenerator (5), einer beabstandet zum Gasgenerator (5) angeordneten Airbagbox (4) und einer den Gasgenerator (5) mit der Airbagbox (4) verbindenden Gaszuführeinrichtung (6) besteht, umfassend ferner eine Rückenlehne (1) und ein mit dieser beispielsweise über Sitzbeschläge (8) verbundenes Sitzteil, **dadurch gekennzeichnet,**
**dass** die Rückenlehne (1) und/oder das Sitzteil einen aus Profilen (20, 21, 22, 23, 24, 25) bestehenden Rahmen (2) aufweist, und dass der Rahmen (2) der Rückenlehne (1) wenigstens aus zwei äußeren Vertikalprofilen (22, 23 bzw. 23') und zwei äußeren Horizontalprofilen (20, 21) besteht, wobei die Airbagbox (4) in einem bestimmten äußeren Vertikalprofil (23, 23') und der Gasgenerator (5) in einem anderen Profil (20 oder 21 oder 22 oder 24 oder 25) untergebracht ist.

2. Fahrzeugsitz nach Anspruch 1, **dadurch gekennzeichnet, dass** wenigstens ein Profil (20, 21, 22, 23, 24, 25) wenigstens abschnittsweise derart ausgebildet ist, dass es direkt als Gaszuführeinrichtung dient.

3. Fahrzeugsitz nach Anspruch 1 oder 2, **dadurch gekennzeichnet, dass** wenigstens ein Rahmenprofil (20, 21, 22, 23, 24, 25) ein Hohlprofil ist, welches zumindest abschnittsweise eine mittels Innenhochdruckumformung erzeugte Profilgestalt aufweist.

4. Fahrzeugsitz nach einem der Ansprüche 1 bis 3, **dadurch gekennzeichnet, dass** der Gasgenerator (5) in einem Horizontalprofil (20 oder 21 oder 24 oder 25) der Rückeniehne (1) untergebracht ist.

5. Fahrzeugsitz nach Anspruch 4, **dadurch gekennzeichnet, dass** der Gasgenerator (5) im untersten Horizontalprofil (21) der Rückenlehne (1) untergebracht ist.

6. Fahrzeugsitz nach einem der Ansprüche 1 bis 3, **dadurch gekennzeichnet, dass** der Gasgenerator (5) in dem anderen äußeren Vertikalprofil (22) untergebracht ist.

7. Fahrzeugsitz nach einem der Ansprüche 1 bis 6, **dadurch gekennzeichnet, dass** die Airbagbox (4, 4') in eine taschenartige Vertiefung (230, 230') des äußeren Vertikalprofils (23, 23') eingepasst ist.

8. Fahrzeugsitz nach einem der Ansprüche 1 bis 7, **dadurch gekennzeichnet, dass** die Airbagbox (4, 4') Mittel (42, 42') zur Abstützung aufweist, die als im wesentlichen umlaufender Flansch ausgebildet sind.

9. Fahrzeugsitz nach einem der Ansprüche 1 bis 8, **dadurch gekennzeichnet, dass** ein Gehäuse des Gasgenerators (5) zumindest abschnittsweise integraler Bestandteil eines der Profile (20, 21, 22, 23, 24, 25) ist.

## Claims

1. Vehicle seat having at least one laterally acting airbag module, the airbag module comprising a gas generator (5), an airbag box (4) which is arranged at a distance from the gas generator (5), and a gas feeding device (6) which connects the gas generator (5) to the airbag box (4), further comprising a backrest (1) and a seat part which is connected to the latter, for example, via seat fittings (8), **characterized in that** the backrest (1) and/or the seat part has a frame (2) which comprises profiles (20, 21, 22, 23, 24, 25), and **in that** the frame (2) of the backrest (1) comprises at least two outer vertical profiles (22, 23 or 23') and two outer horizontal profiles (20, 21), the airbag box (4) being accommodated in a defined outer vertical profile (23, 23') and the gas generator (5) being accommodated in another profile (20 or 21 or 22 or 24 or 25).

2. Vehicle seat according to Claim 1, **characterized in that** at least one profile (20, 21, 22, 23, 24, 25) is configured, at least in part, such that it serves directly as a gas feeding device.

3. Vehicle seat according to Claim 1 or 2, **characterized in that** at least one frame profile (20, 21, 22, 23, 24, 25) is a hollow profile which, at least in part, has a profile design which is produced by means of hydroforming.

4. Vehicle seat according to one of Claims 1 to 3, **characterized in that** the gas generator (5) is accommodated in a horizontal profile (20 or 21 or 24 or 25) of the backrest (1).

5. Vehicle seat according to Claim 4, **characterized in that** the gas generator (5) is accommodated in the lowermost horizontal profile (21) of the backrest (1).

6. Vehicle seat according to one of Claims 1 to 3, **characterized in that** the gas generator (5) is accommodated in the other outer vertical profile (22).

7. Vehicle seat according to one of Claims 1 to 6, **characterized in that** the airbag box (4, 4') is fitted into a pocket-like depression (230, 230') in the outer vertical profile (23, 23').

8. Vehicle seat according to one of Claims 1 to 7, **characterized in that** the airbag box (4, 4') has means (42, 42') for support which are configured as a substantially peripheral flange.

9. Vehicle seat according to one of Claims 1 to 8, **characterized in that** a housing for the gas generator (5) is, at least in part, an integral component of one of the profiles (20, 21, 22, 23, 24, 25).

## Revendications

1. Siège de véhicule comportant au moins un module d'airbag agissant latéralement, le module d'airbag consistant en un générateur de gaz (5), un caisson d'airbag (4) disposé à distance du générateur de gaz (5) et un dispositif d'alimentation en gaz (6) reliant le générateur de gaz (5) au caisson d'airbag (4), comprenant en outre un dossier (1) et une pièce de siège reliée à ce dernier par exemple par des revêtements de siège (8),
**caractérisé en ce que**
le dossier (1) et ou/la pièce de siège présente un châssis (2) composé de profilés (20, 21, 22, 23, 24, 25) et que le châssis (2) du dossier (1) consiste au moins en deux profilés verticaux extérieurs (22, 23 ou 23') et deux profilés horizontaux extérieurs (20, 21), le caisson d'airbag (4) étant logé dans un certain profilé vertical extérieur (23, 23') et le générateur de gaz (5) dans un autre profilé (20 ou 21 ou 22 ou 24 ou 25).

2. Siège de véhicule selon la revendication 1, **caractérisé en ce qu'**au moins un profilé (20, 21, 22, 23, 24, 25) est réalisé au moins par sections de manière à servir directement de dispositif d'alimentation en gaz.

3. Siège de véhicule selon la revendication 1 ou 2, **caractérisé en ce qu'**au moins un profilé de châssis (20, 21, 22, 23, 24, 25) est un profilé creux qui présente au moins par sections une forme profilée créée par déformation sous haute pression interne.

4. Siège de véhicule selon l'une quelconque des revendications 1 à 3, **caractérisé en ce que** le générateur de gaz (5) est logé dans un profilé horizontal (20 ou 21 ou 24 ou 25) du dossier (1).

5. Siège de véhicule selon la revendication 4, **caractérisé en ce que** le générateur de gaz (5) est logé dans le profilé horizontal situé le plus en bas (21) du dossier (1).

6. Siège de véhicule selon l'une quelconque des revendications 1 à 3, **caractérisé en ce que** le générateur de gaz (5) est logé dans l'autre profilé vertical extérieur (22).

7. Siège de véhicule selon l'une quelconque des revendications 1 à 6, **caractérisé en ce que** le caisson d'airbag (4, 4') est ajusté dans un renfoncement en forme de poche (230, 230') du profilé vertical extérieur (23, 23').

8. Siège de véhicule selon l'une quelconque des revendications 1 à 7, **caractérisé en ce que** le caisson d'airbag (4, 4') présente des moyens (42, 42') de soutien qui sont réalisés sous forme d'un flasque sensiblement périphérique.

9. Siège de véhicule selon l'une quelconque des revendications 1 à 8, **caractérisé en ce qu'**un boîtier du générateur de gaz (5) fait, au moins par sections, partie intégrante d'un des profilés (20, 21, 22, 23, 24, 25).
